Europäisches Patentamt

(19) European Patent Office

Office européen des brevets

(11) Publication number : **0 463 902 A1**

# (12) EUROPEAN PATENT APPLICATION

(21) Application number : **91401482.4**

(22) Date of filing : **06.06.91**

(51) Int. Cl.⁵ : **C02F 3/34, C02F 3/12**

(30) Priority : **12.06.90 JP 151559/90**

(43) Date of publication of application :
**02.01.92 Bulletin 92/01**

(84) Designated Contracting States :
**DE FR GB**

(71) Applicant : **MITSUBISHI GAS CHEMICAL
COMPANY, INC.
5-2, Marunouchi 2-chome Chiyoda-Ku
Tokyo, 100 (JP)**

(72) Inventor : **Urakami, Teizi, c/o Niigata Research
Laboratory
Mitsubishi Gas Chemical Co., Inc. 182,
Shinwari
Tayuhama, Niigata-shi, Niigata 950-31 (JP)**
Inventor : **Kobayashi, Hisao, c/o Niigata
Research Laboratory
Mitsubishi Gas Chemical Co., Inc. 182,
Shinwari
Tayuhama, Niigata-shi, Niigata 950-31 (JP)**
Inventor : **Araki, Hisaya, c/o Niigata Research
Laboratory
Mitsubishi Gas Chemical Co., Inc. 182,
Shinwari
Tayuhama, Niigata-shi, Niigata 950-31 (JP)**

(74) Representative : **Bourgognon, Jean-Marie et al
Cabinet Flechner 22, Avenue de Friedland
F-75008 Paris (FR)**

(54) Methode for removal of methylamines.

(57)    Methylamines contained in aqueous solutions such as industrial waste liquor and the like can be efficiently decomposed and removed by culturing methylamine-assimilating bacteria of the genus Paracoccus using said liquor as a medium or introducing into said solution cells and/or material derived from treatment of the cells which are previously produced by growing a culture of methylamine-assimilating bacteria of the genus Paracoccus. Paracoccus aminophilus and/or Paracoccus aminovorans are used as the methylamine-assimilating bacteria.

EP 0 463 902 A1

The present invention relates to a method for decomposition and removal of methylamines from a solution containing them and more particularly, to a method for decomposition and removal of methylamines from a solution containing them utilizing bacteria.

Methylamines are contained in waste liquor discharged from factories for production of methylamines or in industrial waste liquor as decomposition products of tetramethylammonium hydroxide or dimethylformamide.

These waste liquors containing methylamines are harmful and must be discharged after subjected to treatments for making them harmless for environmental health. However, it has been difficult to decompose and remove dimethylamines by conventional activated sludge treatment.

If bacteria which can efficiently assimilate and decompose these methylamines which are difficult to decompose can be found, it will become possible to efficiently make the waste liquors containing methylamines harmless by these bacteria.

As a result of extensive searching in the natural world, the inventors have found bacteria which can vigorously assimilate or strongly decompose methylamines and have accomplished the present invention utilizing the bacteria.

That is, the present invention is a method for removing methylamines, characterized by contacting a solution containing methylamines with cells of the bacteria belonging to the genus Paracoccus and capable of assimilating and decomposing methylamines and/or materials derived by treatment of the cells, thereby to decompose and remove the methylamines from the solution.

Bacteria used in the present invention can be strains which belong to the genus Paracoccus and have ability to assimilate efficiently and decompose methylamines and are not critical.

Typical examples of these strains are Paracoccus aminophilus DM-15 and Paracoccus aminovorans DM-82.

These strains have been isolated from soil by the inventors.

Microbiological properties of Paracoccus aminophilus DM-15 (JCM 7686) are shown below.

1. Morphology:

The strains were cultured on bouillon liquid medium and bouillon agar medium at 30°C for 1 day.
(1) Form and size of cell: Coccoid or short rod-shaped with 0.5-0.9 μm in width and 0.5-2.0 μm in length. Occur singly, in pair or in clusters.
(2) Motility: Nonmotile
(3) Spore: Nonspore forming.
(4) Gram stain: Gram- negative
(5) Acid resistance: Negative
(6) Extracellular viscous material: Not produced.

2. Growth in the following media (Unless otherwise stated, the strains were cultured at 30°C for 3 days.)

(1) Bouillon agar plate medium
Form and shape of colonies:
External shape - Circular, Size - 2-3mm, Protuberance - Hemispherical, Structure - Homogeneous, Surface - Smooth, Edge - Smooth and entire, Color - White or yellowish white, Transparency - Opaque, Hardness - Butter-like.
(2) Monomethylamine - containing agar plate medium Same as on the bouillon agar plate medium.
(3) Bouillon agar slant medium
Strains grow flourishingly and uniformly along the inoculation line.
Protuberance - Medium, Surface - Smooth, Edge - Smooth, Color - White or yellowish white, Transparency - Opaque, Hardness - Butter-like.
(4) Monomethylamine-containing agar slant medium
Same as on the bouillon agar slant medium.
(5) Bouillon liquid medium
Grow in the whole portion. Precipitation occurs. No annulus is formed.
(6) Aqueous pepton medium
Weakly grow in the whole portion.
Precipitation occurs. No annulus is formed.
(7) Monomethylamine-containing liquid medium
Grow in the whole portion. Precipitation occurs. No annulus is formed.
(8) Bouillon agar stab culture

Uniformly grow in the form of small nipple.
Grow in the form of circle of about 2-4 mm in diameter on the surface of the medium.
(9) Monomethylamine-containing agar stab culture
Uniformly grow in the form of small nipple.
Grow in the form of circle of about 2-4 mm in diameter on the surface of the medium.
(10) Bouillon gelatin layer culture (at 20°C for 10 days)
Growth of bacteria is recognized, but gelatin is not liquefied.
(11) Litmus milk culture (at 30°C for 4 weeks)
Growth of bacteria is recognized, but alkali is not produced. The growth is flourishing.

3. Physiological properties:

(1) Reduction of nitrates: Nitrates are reduced to nitrites.
(2) MR test: Negative
(3) VP test: Negative
(4) Production of indole: Negative
(5) Production of hydrogen sulfide: Negative
(6) Hydrolysis of starch: Negative
(7) Utilization of citric acid (Koser medium and Christensen medium are used in combination): Not utilized.
(8) Utilization of nitrogen sources: Ammonium salts and pepton are respectively used as nitrogen sources. Nitrites and urea cannot be utilized.
(9) Production of dyes: Not produced.
(10) Urease: Negative
(11) Catalase: Positive
(12) Production of ammonia: Produced.
(13) Ranges for growth:
pH is 6-9, preferably 6.5-8.0. Temperature is 5-30°C, preferably 25-30°C, not grow at 37°C.
(14) Behavior to oxygen: Aerobic.
(15) Oxidase reaction: Positive
(16) O-F test (Hugh Leifson method):Sugar is oxidatively decomposed, but is not fermentatively decomposed.
(17) Assimilation of saccharides and production of acid and gas.

| Carbon sources | Assimilation | Production of acid | Production of gas |
|---|---|---|---|
| L-arabinose | + | + | - |
| D-xylose | + | - | - |
| D-glucose | + | + | - |
| D-mannose | - | - | - |
| D-fructose | - | - | - |
| D-galactose | + | + | - |
| Maltose | - | - | - |
| Sucrose | - | - | - |
| Lactose | - | - | - |
| Trehalose | - | - | - |
| D-sorbitol | - | - | - |
| D-mannitol | - | + (W) | - |
| Inositol | - | - | - |
| Glycerol | + | - | - |
| Starch | - | - | - |

Assimilation:  Assimilated and decomposed.

+ (W):  Acid is produced, though weakly.

(18) Assimilation of carbon sources other than saccharides

| Carbon Sources | Assimilation |
|---|---|
| Citric acid * | − |
| Succinic acid * | + |
| Acetic acid * | + |
| Formic acid * | − |
| Ethanol ** | − |
| Butanol ** | − |
| Methanol ** | − |
| Monomethylamine * | + |
| Dimethylamine * | + |
| Trimethylamine * | + |
| Dimethylformamide ** | + |
| Methane | − |
| Hydrogen | − |

      *:   0.15 wt%

      **:  0.5 vol%

(19) Resistance to salt: Growth in a medium containing 3% by weight of NaCl is weak.
(20) Vitamin requirement: Thiamine required essentially.
(21) Denitrification reaction: Negative
(22) GC (guanine + cytosine) content: 62.6 mol%
(23) Main cellular fatty acid: Unsaturated monofatty acid $C_{18:1}$
(24) Main hydroxy acid: 3-Hydroxy acid $C_{10:0}$, $C_{14:0}$
(25) Quinone type: Ubiquinone $Q_{10}$
(26) Isolation source: Soil

Paracoccus aminophilus DM-15 is nonmotile, short rod or coccoid, gram-negative, and monomethylamine-assimilating bacterium with major cellular fatty acids being $C_{18:1}$ acids and major hydroxy acids being 3-hydroxy acid $C_{10:0}$ and $C_{14:0}$ and quinone type being ubiquinone $Q_{10}$. Thus, the bacterium is considered to resemble Paracoccus denitrificans of Group 8 of taxonomy by Urakami and Komagata [J. Gen. Appln. Microbiol. 32, 317-341, (1986)]. However, this bacterium is different from Paracoccus denitrificans in denitrification ability and assimilation of xylose, D-mannose, D-fructose, D-sorbitol, D-mannitol, trehalose, inositol, methanol, ethanol, hydrogen, dimethylamine, trimethylamine, and especially dimethylformamide. Therefore, the inventors named this bacterium Paracoccus aminophilus.

Microbiological properties of Paracoccus aminovorans DM-82 (JCM 7685) are shown below.

1. Morphology:

The strains were cultured in bouillon liquid medium and bouillon agar medium at 30°C for 1 day.
(1) Form and size of cell: Coccoid or short rod-shaped with 0.5-0.9 μm in width and 0.5-2.0 μm in length. Occur singly, in pairs or in clusters.
(2) Motility: Nonmotile
(3) Spore: Nonspore forming.
(4) Gram stain: Gram-negative
(5) Acid resistance: Negative
(6) Extracellular viscous material: Not produced.

2. Growth in the following media (Unless otherwise stated, the strains were cultured at 30°C for 3 days.)

(1) Bouillon agar plate medium
Form and shape of colonies:
External shape: Circular, Size: 2-3 mm, Protuberance: Hemispherical, Structure: Homogeneous, Surface: Smooth, Edge: Smooth and entire, Color: White or yellowish white, Transparency: Opaque, Hardness: Butter-like.
(2) Monomethylamine-containing agar plate medium
Same as on the bouillon agar plate medium.
(3) Bouillon agar slant medium
Strains grow flourishingly and uniformly along the inoculation line.
Protuberance: Medium, Surface: Smooth, Edge: Smooth, Color: White or yellowish white, Transparency: Opaque, Hardness: Butter-like.
(4) Monomethylamine-containing agar slant medium
Same as on the bouillon agar slant medium.
(5) Bouillon liquid medium
Grow in the whole portion. Precipitation occurs. No annulus is formed.
(6) Aqueous peptone medium
Weakly grow in the whole portion.
Precipitation occurs. No annulus is formed.
(7) Monomethylamine-containing liquid medium
Grow in the whole portion. Precipitation occurs. No annulus is formed.
(8) Bouillon agar stab culture
Uniformly grow in the form of small nipple.
Grow in the form of circle of about 2-4 mm in diameter on the surface of the medium.
(9) Monomethylamine-containing agar stab culture
Uniformly grow in the form of small nipple.
Grow in the form of circle of about 2-4 mm in diameter on the surface of the medium.
(10) Bouillon gelatin layer culture (at 20°C for 10 days)
Growth of bacteria is recognized, but gelatin is not liquefied.
(11) Litmus milk culture (at 30°C for 4 weeks)
Growth of bacteria is recognized, but alkali is not produced. The growth is flourishing.

3. Physiological properties:

(1) Reduction of nitrates: Nitrates are reduced to nitrites.
(2) MR test: Negative
(3) VP test: Negative
(4) Production of indole: Negative
(5) Production of hydrogen sulfide: Negative
(6) Hydrolysis of starch: Negative
(7) Utilization of citric acid (Koser medium and Christensen medium are used in combination): Not utilized.
(8) Utilization of nitrogen sources: Ammonium salts and peptone are respectively used as nitrogen sources. Nitrates and urea cannot be utilized.
(9) Production of dyes: Not produced.
(10) Urease: Negative
(11) Catalase: Positive
(12) Production of ammonia: Produced.
(13) Ranges for growth: pH is 6-9, preferably 6.5-8.0. Temperature is 5-37°C, preferably 25-35°C, Not grow at 42°C.
(14) Behavior to oxygen: Aerobic.
(15) Oxidase reaction: Positive
(16) O-F test (Hugh Leifson Method): Sugar is oxidatively decomposed, but is not fermentatively decomposed.
(17) Assimilation of saccharides and production of acid and gas.

| Carbon sources | Assimilation | Production of acid | Production of gas |
|---|---|---|---|
| L-arabinose | + | + | − |
| D-xylose | − | − | − |
| D-glucose | + | + | − |
| D-mannose | + | + | − |
| D-fructose | + | + | − |
| D-galactose | + | + | − |
| Maltose | − | − | − |
| Sucrose | − | − | − |
| Lactose | − | − | − |
| Trehalose | − | − | − |
| D-sorbitol | + | + | − |
| D-mannitol | + | + | − |
| Inositol | − | − | − |
| Glycerol | + | +(W) | − |
| Starch | − | − | − |

Assimilation: Assimilated and decomposed.

+(W): Acid is produced, though weakly.

(18) Assimilation of carbon sources other than saccharides

| Carbon sources | Assimilation |
|---|---|
| Citric acid * | − |
| Succinic acid * | + |
| Acetic acid * | + |
| Formic acid * | − |
| Ethanol ** | − |
| Butanol ** | − |
| Methanol ** | − |
| Monomethylamine * | + |
| Dimethylamine * | + |
| Trimethylamine * | + |
| Dimethylformamide ** | + |
| Methane | − |
| Hydrogen | − |

*: 0.15 wt%

**: 0.5 vol%

7

(19) Resistance to salt: Growth in a medium containing 3% by weight of NaCl is weak.

(20) Vitamin requirement: Thiamine required essentially.

(21) Denitrification reaction: Negative

(22) GC (guanine + cytosine) content: 67.0 mol%

(23) Main cellular fatty acid: Unsaturated monofatty acid $C_{18:1}$

(24) Main hydroxy acid: 3-Hydroxy acids $C_{10:0'}$, $C_{14:0}$

(25) Quinone type: Ubiquinone $Q_{10}$

(26) Isolation source: Soil

Paracoccus aminovorans DM-82 is nonmotile, short rod or coccoid, gram-negative, and monomethylamine-assimilating bacterium with GC content of 67.0 mol% and major cellular fatty acids being $C_{18:1}$ acids and major hydroxy acids being 3-hydroxy acid $C_{10:0}$ and $C_{14:0}$ and quinone type being ubiquinone $Q_{10}$. Thus, the bacterium is considered to resemble Paracoccus denitrificans of Group 8 of taxonomy by Urakami and Komagata [J. Gen. Appln. Microbiol. 32,317-341, (1986)]. However, this strain is different from Paracoccus denitrificans in denitrification ability and assimilation of trehalose, inositol, methanol, ethanol, hydrogen, dimethylamine, trimethylamine, and especially dimethylformamide.

Therefore, the inventors named this bacterium Paracoccus aminovorans.

The microbiological properties of Paracoccus aminophilus DM-15 and Paracoccus aminovorans DM-82 are also described in "International Journal of Systematic Bacteriology, Vol. 40, p287-291, 1990".

In the present invention, experimental methods for examination of microbiological properties are in accordance with "Bergey's Manual of Systematic Bacteriology, Vol. 1 edited by Krieg and Holt: Williams & Wilkins Co., (1984)", Manual of Bacteriological Practice (Saikingaku Teiyo) (1958)" edited by Medical and Chemical Institute, Alumni Association, and "Classification and Identification of Microorganisms (Biseibutsu no Bunrui to Dotei) (1975)", edited by Takeji Hasegawa.

Monomethylamine-containing agar plate medium and monomethylamine-containing agar slant medium were prepared in the following manner: That is, 3g of $(NH_4)_2SO_4$, 1.4 g of $KH_2PO_4$, 2.1 g of $Na_2HPO_4$, 0.2 g of $MgSO_4 \cdot 7H_2O$, 30 mg of $CaCl_2$, $2H_2O$, 30 mg of $FeC_6H_5O_7 \cdot XH_2O$, 5mg of $MnCl_2 \cdot 4H_2O$, 5 mg of $ZnSO_4 \cdot 7H_2O$, 0.5 mg of $CuSO_4 \cdot 5H_2O$, 0.2 g of yeast extract, and 5 g of monomethylamine hydrochloride were added to 1 liter of pure water and pH was adjusted to 7.1. Then, 15 g/l of agar was further added thereto and the mixture was subjected to dissolution with heating and then, was sterilized at 1 kg/cm² G for 20 minutes.

As the monomethylamine-containing liquid medium, a medium of the same composition as above except that agar was not added, was used.

In order to make harmless a solution containing methylamines (which may be referred to as "solution to be treated" hereinafter), there may be employed a method which comprises adding various nutrients to the solution to be treated, and cultivating bacteria which belong to the genus Paracoccus and can assimilate and decompose methylamines (hereinafter referred to as "the present bacteria") using the above solution as a medium.

That is, the nutrients added to the solution to be treated may be substances which have no limitation as long as the present bacteria used can assimilate the said substances and include carbon sources, nitrogen sources, inorganic components and other components. The methylamines include monomethylamine, dimethylamine and trimethylamine and salts thereof can also be treated.

As carbon sources, only the methylamines in the solution to be treated may be used, but other carbon sources which the present bacteria used can assimilate, for example, saccharides such as L-arabinose, D-glucose and D-galactose, sugar alcohols such as glycerol and organic acids such as acetic acid can be used in combination.

As nitrogen sources, there may be used inorganic nitrogen compounds such as ammonium salts and/or organic nitrogen-containing materials such as alkylamines, corn steep liquor, casein, peptone and meat extract.

Since the methylamines are nitrogen compounds, the present bacteria sufficiently grow and proliferate without adding other nitrogen sources and can assimilate and decompose methylamines.

As inorganic components, there may be used, for example, calcium salts, magnesium salts, potassium salts, sodium salts, phosphates, manganese salts, zinc salts, iron salts, copper salts, molybdenum salts, cobalt salts, boron compounds, and iodine compounds.

When strains which require nutrients such as vitamines are used, the nutrients required by the strains are added.

Concentration of methylamines in the solution to be treated is not critical and may be that at which the present bacteria used can assimilate and decompose, but is preferably 3 wt% or less, especially preferably 1 wt% or less.

Culture conditions may be such that the bacteria used can grow and proliferate and usually, for example, temperature is 5-37°C, preferably 10-35°C and pH is 6-9, preferably 6.5-8.0.

By aerobic culture of the present bacteria under the above conditions, methylamines are decomposed and methylamines in the solution to be treated decrease or disappear and simultaneously the present bacteria smoothly proliferate.

Therefore, cell concentration in the solution to be treated, at the time of decomposition treatment by culture cannot be generically specified. With increase in cell concentration, decomposition rate of methylamines increases, but practically, the cell concentration is preferably 1/5 (in terms of dry cell) or more of the content (weight) of methylamines in the solution to be treated.

Concentration of dissolved oxygen in the solution to be treated may be that at which the present bacteria can grow and proliferate and has no special limitation and this is similar to the dissolved oxygen concentration in cultivation of usual bacteria.

The desired concentration of dissolved oxygen can be attained by employing such means as controlling amount of aeration gas (air), stirring, use of oxygen gas or a mixed gas of oxygen and air as the aeration gas and increase of the pressure in the culture tank.

Treatment outside the above conditions can be done although growth and proliferation of the present bacteria relatively deteriorate and efficiency to decompose and remove methylamines relatively decreases.

Furthermore, method of treatment may be any of batch wise, continuous wise or semicontinuous wise.

In addition to the above-mentioned method for making harmless methylamines in the solution to be treated by culturing the present bacteria using the above solution to be treated as a medium, it is also possible to contact cells of the present bacteria previously cultured and materials derived from treatment of the present bacteria, for example, a culture solution containing cells of the present bacteria, crushed cells of the present bacteria and immobilized cells prepared by immobilizing cells of the present bacteria with synthetic resins (these may be generically referred to as "cells" hereinafter) with a solution to be treated.

For example, there are methods such as (a) adding cells to the solution to be treated, (b) contacting an activated sludge which contains the cells, the culture broth, and the crushed cells with solution to be treated, and (c) passing the solution to be treated through a column in which the immobilized cells are packed. In the methods (a) and (b), an amount of cells used is practically usually at least 0.1 g (in terms of dry cells hereinafter), preferably about 0.1-10 g per 1 liter of the solution to be treated for carrying out the treatment in a short time.

When culture broth or crushed cells are used, an amount thereof is that which corresponds to the above-mentioned amount of cells. Immobilization of enzyme or cells in the method (c) can be carried out by conventional methods such as carrier bonding method, crosslinking method and inclusion method. For attaining further efficient treatment, use of the immobilized cells is preferred. In this case, cells are enclosed in microcapsules or ultrafiltration membranes of polymer gels such as collagen, carrageenan, and polyurethane, collodion, phospholipid, and the like. In all of the methods (a), (b) and (c), concentration of methylamines in the solution to be treated, temperature and pH are similar to the conditions used in decomposition by culture.

Since industrial waste liquor containing methylamines often contains other materials, for treatment of such industrial waste liquor,cells which can decompose the other materials can be used together with the cells of the present bacteria and this is preferred.

After completion of the treatment, the thus treated solution in which concentration of methylamines has been reduced to less than the permissible concentration is discharged as it is or, if necessary, after cells and/or materials derived from treatment of the cells have been removed.

The present invention will be explained in more detail by the following nonlimiting examples.

Example 1

A basal medium was prepared by adding to 1 liter of pure water 3 g of $(NH_4)_2SO_4$, 1.4 g of $KH_2PO_4$, 2.1 g of $Na_2HPO_4$, 0.2g of $MgSO_4 \cdot 7H_2O$, 30 mg of $CaCl_2 \cdot 2H_2O$, 30 mg of $FeC_6H_5O_7 \cdot XH_2O$, 5 mg of $MnCl_2 \cdot 4H_2O$, 5 mg of $ZnSO_4 \cdot 7H_2O$, 0.5 mg of $CuSO_4 \cdot 5H_2O$, and 0.2 g of yeast extract and adjusting pH to 7.1. A given amount of monomethylamine, dimethylamine or trimethylamine was added to the basal medium to obtain a medium. _Paracoccus_ _aminophilus_ DM-15 or _Paracoccus_ _aminovorans_ DM-82 was inoculated to each medium and cultured at 30°C for 7 days. Assimilation of methylamines was evaluated.

From Tables 1 and 2, it can be seen that even the solutions of high concentration of methylamines can be efficiently made harmless by the present invention.

Table 1    Paracoccus aminophilus DM-15

| Concentration (wt%) | Monomethylamine | Dimethylamine | Trimethyl-amine |
|---|---|---|---|
| 0.5 | + + | + + | + + |
| 1.0 | + + | + + | + + |
| 1.5 | + | + | + |
| 2.0 | − | − | − |

++:  The methylamine is vigorously assimilated.

+:  The methylamine is assimilated.

−:  The methylamine is not assimilated.

Table 2    Paracoccus aminovorans DM-82

| Concentration (wt%) | Monomethylamine | Dimethylamine | Trimethyl-amine |
|---|---|---|---|
| 0.5 | + + | + + | + + |
| 1.0 | + + | + + | + + |
| 1.5 | + + | + + | + + |
| 2.0 | + | + | + |
| 3.0 | − | − | − |

++:  The methylamine is vigorously assimilated.

+:  The methylamine is assimilated.

−:  The methylamine is not assimilated.

Example 2

A medium was prepared by adding to 1 liter of pure water 3 g of $(NH_4)_2SO_4$, 1.4 g of $KH_2PO_4$, 2.1 g of $Na_2HPO_4$, 0.2 g of $MgSO_4 \cdot 7H_2O$, 30 mg of $CaCl_2 \cdot 2H_2O$, 30 mg of $FeC_6H_5O_7 \cdot XH_2O$, 5 mg of $MnCl_2 \cdot 4H_2O$, 5 mg of $ZnSO_4 \cdot 7H_2O$, 0.5 mg of $CuSO_4 \cdot 5H_2O$, 0.2 g of yeast extract, and 5 g of dimethylamine and adjusting pH to 7.0. 200 ml of this medium was put in a 1 liter conical flask and sterilized at 120°C for 20 minutes.

Into this medium was inoculated 1 vol% of preculture broth (cell concentration $OD_{610nm}$: 2.1) of Paracoccus aminophilus DM-15 obtained by previous culture in a medium similar to the above medium and culture was carried out at 30°C for 50 hours.

The resulting culture broth had a pH of 5.8 and contained about 1.2 g (in terms of dry cells hereinafter) of cells of the bacterium per 1 liter of the culture broth. Neither monomethylamine nor dimethylamine were detected in the supernatant liquid of the culture broth. Generation time was about 4.5 hours.

Example 3

Dimethylamine was decomposed by culture of Paracoccus aminovorans DM-82 in the same manner as in Example 2. The resulting culture broth had a pH of 5.9 and contained about 1.3 g of cells of the bacterium per 1 liter of the culture broth. Neither monomethylamine nor dimethylamine were detected in the supernatant liquid of the culture solution. Generation time was about 4.5 hours.

Example 4

Monomethylamine was decomposed in the same manner as in Example 2 except that a medium containing 5 g of monomethylamine was used.

The resulting culture broth had a pH of 5.9 and contained about 1.1 g of cells of the bacterium per 1 liter of the culture broth. No monomethylamine was detected in the supernatant liquid of the culture broth. Generation time was about 3.5 hours.

Example 5

Trimethylamine was decomposed in the same manner as in Example 3 except that a medium containing 5 g of trimethylamine was used.

The resulting culture broth had a pH of 5.9 and contained about 1.3 g of cells of the bacterium per 1 liter of the culture broth. None of methylamines were detected in the supernatant liquid of the culture broth. Generation time was about 4 hours.

Example 6

1.5 liter of the basal medium of Example 1 was put in a 3 liter jar fermentor and sterilized at 120°C for 20 minutes. Then, 7.5 g of dimethylamine was aseptically added thereto and this was used as a medium.

Into this medium was inoculated 1 vol% of culture broth containing Paracoccus aminophilus DM-15 cultured at 30°C for 40 hours using the same medium as in Example 2 and was cultured. Aerated stirring was carried out at 30°C while adding aqueous ammonia so that pH of culture broth was kept at 7.0 during the culturing period. After lapse of a lag phase of 5 hours, logarithmic growth phase came and dimethylamine in this culture broth was consumed and decreased.

After 40 hours from beginning of culture, decomposition of dimethylamine was carried out by feeding a solution to be treated to the treating tank and discharging from the treating tank the treated solution in an amount equal to the solution to be treated so that the average residence time was 15 hours (dilution ratio D=0.067 hr$^{-1}$). Aqueous ammonia was added so that pH of the solution to be treated was kept at 7.0. The solution to be treated and used here was prepared by dissolving 1.5 g of $KH_2PO_4$, 0.5 g of $MgSO_4 \cdot 7H_2O$, 30 mg of $CaCl_2 \cdot 2H_2O$, 30 mg of $FeC_6H_5O_7 \cdot XH_2O$, 5 mg of $MnCl_2 \cdot 4H_2O$, 5 mg of $ZnSO_4 \cdot 7H_2O$, 0.5 mg of $CuSO_4 \cdot 5H_2O$, 0.2 g of yeast extract, and 10 g of dimethylamine in industrial water so that total amount reached 1 kg and then, sterilizing the solution. The treated solution contained about 3.3 g of cells of the bacterium per 1 liter and neither monomethylamine nor dimethylamine were detected therein. The treated solution from which cells were removed had a COD value of 200 ppm and TOC value of 210 ppm. Concentration of dissolved oxygen in the solution to be treated in the treating tank was 2-4 ppm.

Example 7

Treatment of industrial waste liquor containing 0.6 wt% of dimethylamine and having a TOC value of 5300 ppm, a COD value of 2700 ppm, and a pH of 11.6 was carried out.

1.5 liter of the basal medium of Example 1 was put in a 3 liter jar fermentor and sterilized at 120°C for 20 minutes. Then, 7.5 g of dimethylamine was aseptically added thereto and this was used as a medium.

Into this medium was inoculated 1 vol% of culture broth containing Paracoccus aminovorans DM-82 cultured at 30°C for 40 hours using the same medium as in Example 2 and was cultured. Aerated stirring was carried out at 30°C while adding aqueous ammonia so that pH of culture broth was kept at 7.0 during the culturing period. After lapse of a lag phase of 6 hours, logarithmic growth phase came and dimethylamine in this culture broth was consumed and decreased.

After 50 hours from beginning of culture, decomposition of dimethylamine was carried out by feeding a solution to be treated to the treating tank and discharging from the treating tank the treated solution in an amount equal to the solution to be treated so that the average residence time was 20 hours (dilution ratio D=0.05 hr$^{-1}$). Aqueous ammonia was added so that pH of the solution to be treated was kept at 7.0. The solution to be treated used here was prepared by adding hydrochloric acid to the above industrial waste liquor to adjust to pH 7.0, and adding 1.5 g of $KH_2PO_4$, 0.5 g of $MgSO_4 \cdot 7H_2O$, 30 mg of $CaCl_2 \cdot 2H_2O$, 30 mg of $FeC_6H_5O_7 \cdot XH_2O$, 5 mg of $MnCl_2 \cdot 4H_2O$, 5 mg of $ZnSO_4 \cdot 7H_2O$, 0.5 mg of $CuSO_4 \cdot 5H_2O$, and 0.2 g of yeast extract per 1 liter of the industrial waste liquor. The thus treated solution contained about 2 g of cells of the bacterium per 1 liter and neither monomethylamine nor dimethylamine were detected therein. The treated solution from which cells were removed had a COD value of 1770 ppm and a TOC value of 890 ppm.

In the above Examples, analysis of monomethylamine, dimethylamine or trimethylamine in the solution was conducted by ion chromatography of Toyo Soda.

Pump:　　　Toyo Soda CCPD
Detector:　Toyo Soda CM-8000
Column:　　TSKgel IC-Cation (Toyo Soda)

Decomposition and removal in high efficiency of methylamines which are stable and difficult to decompose and are harmful can be performed according to the present invention. Thus, harmful industrial waste liquors containing methylamines can be efficiently made harmless and the present invention has very high value for maintenance of environmental health.

**Claims**

1.　A method for decomposing and removing methylamines from aqueous solution which comprises culturing methylamine-assimilating bacteria of the genus Paracoccus in said aqueous solution.

2.　A method for decomposing and removing methylamines from aqueous solution which comprises introducing into said solution cells and/or material derived from treatment of the cells which are produced by growing a culture of methylamine-assimilating bacteria of the genus Paracoccus.

3.　A method according to claim 1 or 2, wherein Paracoccus aminophilus and/or Paracoccus aminovorans are used as the methylamine-assimilating bacteria.

4.　A method according to claim 1 or 2, wherein the methylamines to be decomposed and removed include monomethylamine, dimethylamine and/or trimethylamine.

5.　A method according to claim 1 or 2, wherein the aqueous solution of methylamine is an industrial waste liquor.

| European Patent Office | EUROPEAN SEARCH REPORT | Application Number |
|---|---|---|

EP   91 40 1482

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | database WPIL,Nr 90-096510 [13], DERWENT PUBLICATIONS LTD, London; & JP-A-2049576 (NEC CORP) 19.2.1990 --- | 1,2,4,5 | C02F3/34 C02F3/12 |
| X | NEC RESEARCH AND DEVELOPMENT. no. 97, April 1990, TOKYO JP TSUZAKI  AND NAKAMOTO: 'BIODEGRADATION OF TETRAMETHYLAMMONIUM, AN INGREDIENT OF A' FROM  ACTIVATED SLUDGE. * the whole document * --- | 1,2,4,5 | |
| X | Database WPIL, NR 82-79663E [38], DERWENT PUBLICATIONS LTD, London; & JP-A-57129686 (MITSUBISHI GAS CHEM IND) 11-8-82 ----- | 1,4 | |
| | | | TECHNICAL FIELDS SEARCHED (Int. Cl.5 ) C02F |

The present search report has been drawn up for all claims

| Place of search | Date of completion of the search | Examiner |
|---|---|---|
| THE HAGUE | 11 OCTOBER 1991 | GONZALEZ Y ARIAS M. |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P0401)